# EUROPÄISCHE PATENTSCHRIFT

(11) **EP 1 045 777 B1**
(45) Veröffentlichungstag und Bekanntmachung des Hinweises auf die Patenterteilung: **01.09.2004**
(21) Anmeldenummer: 98966193.9
(22) Anmeldetag: 07.12.1998
(51) Int. Cl.: B60R 25/00

(54) **TRANSPONDER-SYSTEM**
TRANSPONDER SYSTEM
SYSTEME TRANSPONDEUR

(30) Priorität: 08.12.1997 AU PP077597; 14.09.1998 AU 8422398
(43) Veröffentlichungstag der Anmeldung: 25.10.2000
(73) Patentinhaber: ROBERT BOSCH GMBH, 70442 Stuttgart (DE)
(72) Erfinder: TARQUINIO, Vincent, Bulleen, VIC 3105 (AU)
(86) Internationale Anmeldenummer: PCT/DE1998/003577
(87) Internationale Veröffentlichungsnummer: WO 1999/029543

(56) Entgegenhaltungen:
- EP-A- 0 714 810
- DE-A- 19 534 416

## Beschreibung

### Stand der Technik

Die vorliegende Erfindung schlägt ein Transponder-System für ein Fahrzeug vor.

Fahrzeuge werden oft mit einer Diebstahlsicherung ausgestattet, welche ein Transponder-System benutzt, um zu bestimmen, wann die Wegfahrsperre aktiviert werden soll. Ein Transponder, der eine Zugangskennung gespeichert hat, ist in dem Zündschlüssel des Fahrzeugs eingebaut. Das Zündschloss beinhaltet eine Antenne, die zum Senden von Signalen zum Transponder und zum Empfang von Signalen vom Transponder, wenn der Schlüssel in das Schloss gesteckt wird, benutzt werden kann. Die Antenne ist mit dem Bord-Elektronikmodul (BEM) des Fahrzeugs verbunden. Das BEM sendet ein Abfragesignal an den Transponder, das den Transponder dazu anregt, die Zugangskennung zum BEM zu senden. Wenn die empfangene Zugangskennung gültig ist, dann deaktiviert das BEM die Wegfahrsperre. Das BEM fragt den Transponder in regelmäßigen Abständen nach der gültigen Zugangskennung ab, und wenn diese nicht erhalten wird, wenn zum Beispiel der Zündschlüssel sich nicht mehr im Fahrzeug befindet, aktiviert das BEM die Wegfahrsperre.

Aus der EP-A-0714814 ist ein Transponder-System für ein Fahrzeug bekannt, bei dem ein Transponder ein Zugangssignal als Antwort auf ein Abfragesignal sendet. Weiterhin ist ein BEM zum Senden des Abfragesignals und zum Empfang des Zugangssignals, das der Transponder in Antwort auf das Abfragesignal sendet vorgesehen, wobei ein Warnsignal erzeugt wird, wenn das Zugangssignal als Antwort auf ein Transponder-Prüfsignal empfangen wird.

Obwohl das oben beschriebene System den Diebstahlschutz des Fahrzeuges bedeutend erhöht, hat sich jedoch ein Problem gezeigt. Dritte Personen mit Zugang zum Zündschlüssel, wie zum Beispiel ein Autohändler oder Angestellte eines Hotel-Parkdienstes, entfernen den Transponder ohne Wissen des Fahrzeugbesitzers vom Zündschlüssel. Dann bringen sie den Transponder an der Lenksäule oder am Zündschloss-Gehäuse an, so dass er in Reichweite der Zündschloss-Antenne ist, aber normalerweise vom Fahrer nicht gesehen werden kann. Der Zündschlüssel oder eine Kopie desselben wird dann dem Besitzer zurückgegeben, welcher natürlich nicht annimmt, dass der Transponder entfernt worden ist. Die Wegfahrsperre wird hiernach niemals aktiviert werden, da der Transponder stets vorhanden ist, wodurch es Dritten möglich ist, das Fahrzeug anschließend mittels herkömmlicher Techniken, wie zum Beispiel Einbruch mit Kurzschließen der Zündung, zu stehlen. Ein Transponder-System, das dieses Problem beseitigt oder zumindest eine brauchbare Alternative darstellt, ist deshalb erwünscht.

### Vorteile der Erfindung

Die vorliegende Erfindung beschreibt ein Transponder-System für ein Fahrzeug, bei dem ein Transponder ein Zugangssignal als Antwort auf ein Abfragesignal sendet und eine Signalverarbeitungseinrichtung zum Senden des besagten Abfragesignals und zum Empfang des besagten Zugangssignals, das der besagte Transponder in Antwort auf das besagte Abfragesignal sendet, wobei ein Warnsignal erzeugt wird, wenn das besagte Zugangssignal als Antwort auf ein Transponder-Prüfsignal empfangen wird und sich das System dadurch auszeichnet, dass die besagte Signalverarbeitungseinrichtung das besagte Abfragesignal als ein Transponder-Prüfsignal sendet, als Antwort darauf, dass entweder das Fahrzeug abgeschlossen wurde oder ein Entriegel-Signal bei einem in der "Aus"-Position befindlichen Zündschloss-Schalter gesendet wurde, um die Türen des Fahrzeugs zu entriegeln.

Eine bevorzugte Realisierung der vorliegenden Erfindung ist anschließend mit Bezug auf die beiliegenden Zeichnungen als Beispiel beschrieben, wobei:

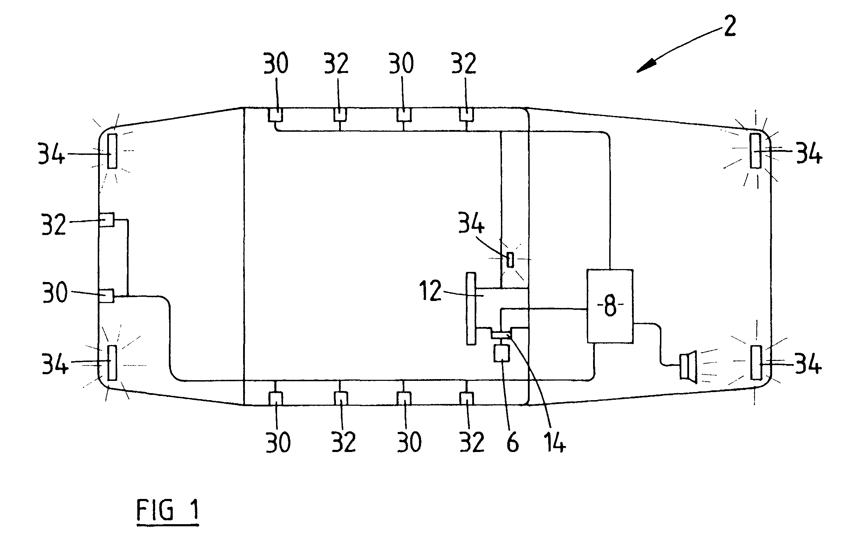

Figur 1 ein Blockdiagramm des Transponder-Systems für ein Fahrzeug,

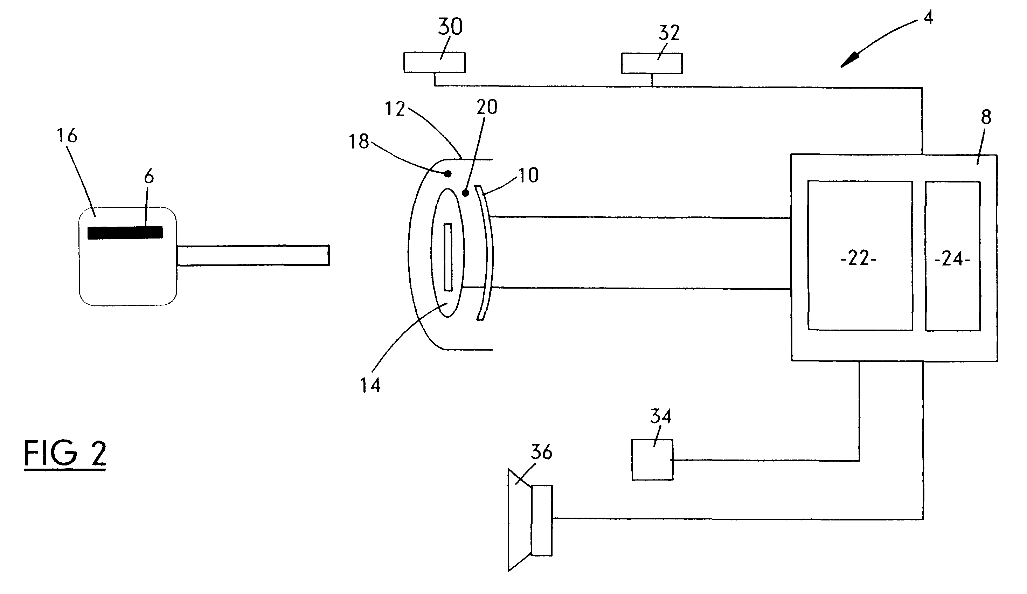

Figur 2 ein schematisches Diagramm des Transponder-Systems,
Figur 3 das Blockdiagramm eines Teils des Transponder-Systems mit einer Zündschloss-Sende- und Empfangseinheit, und
Figur 4 das Blockdiagramm der Zündschloss-Sende- und Empfangseinrichtung ist.

Ein Fahrzeug 2 hat eine Diebstahlsicherung, welche ein Transponder-System 4 wie in den Figuren gezeigt, enthält. Das Transponder-System 4 beinhaltet einen elektronischen Transponder 6 und ein Bord-Elektronikmodul (BEM) 8 welche miteinander über eine sich innerhalb der Lenksäule 12, neben dem Zündschloss-Schalter 14 des Fahrzeuges 2 befindlichen Transponder-Antenne 10 kommunizieren können. Der Transponder 6, der im Zündschlüssel 16 des Fahrzeuges 2 eingearbeitet ist, hat eine elektronische Zugangskennung gespeichert. Beim Einführen des Zündschlüssels 16 in den Schließzylinder des Zündschloss-Schalters 14 und beim Bewegen des Schalters 14 von einer 'Aus'-Stellung 18 zu einer 'Ein'-Stellung 20, welche ACC oder IGN sein kann, sendet das BEM ein Abfragesignal an die Antenne 10. Mit dem Zündschlüssel 16 im Zündschloss-Schalter 14 befindet sich der Transponder 6 innerhalb der Sende-Reichweite der Antenne 10 und das Abfragesignal erregt den Transponder, so dass dieser die Zugangskennung an die Antenne 10 schickt. Die Zugangskennung wird von dem BEM 8, welches die Kennung auf Gültigkeit überprüft, empfangen. Wenn die Zugangskennung gültig ist, erzeugt das BEM 8 ein Signal, welches bewirkt, dass die Wegfahrsperre nicht länger aktiviert ist. In regelmäßigen Intervallen fragt das BEM 8 den Transponder 6 ab, um die Zugangskennung zu erhalten und wenn die Zugangskennung nicht empfangen wird, erzeugt das BEM 8 ein Signal zum Aktivieren der Wegfahrsperre. Dies wird geschehen, wenn der Schlüssel 16 aus dem Zündschloss-Schalter 14 genommen wird und sich außerhalb der Reichweite der Antenne 10 befindet. Das BEM 8 beinhaltet einen Mikroprozessor 22 dessen Steuersoftware im elektronischen Speicher 24 abgelegt ist.

Die Komponenten des Transponder-Systems 4, wie sie im vorherigen Absatz beschrieben sind, sind bekannt und bereits Bestandteile von Fahrzeugen. Die folgenden Komponenten sind ebenfalls bereits in Fahrzeugen eingebaut:
1. Türverriegelungs-Vorrichtungen 30 für die Schlösser jeder Tür. Die Vorrichtungen 30 sind elektromechanische Geräte, die so konstruiert sind, dass sie Verriegel- und Entriegelsignale zum Aktivieren von Verriegelmechanismen in den entsprechenden Türen des Fahrzeuges 2 empfangen. Zu den Türen zählen auch ein Kofferraumdeckel oder eine Heckklappe.
2. Türkontakte 32 für jede Fahrzeugtür. Die Kontakte 32 dienen zur Bestimmung, ob eine Tür geöffnet ist, um entsprechend das Signal an die Fahrzeugelektronik weiterzuleiten, damit entsprechende Einheiten, wie zum Beispiel die Innenbeleuchtung, aktiviert werden.
3. Signalanzeigen 34. Die Signalanzeigen 34 können an verschiedenen Stellen im Fahrzeug angebracht sein und bestehen normalerweise aus Lampen, die von der Fahrzeugelektronik geschaltet oder aktiviert werden. Die Signalanzeigen 34 können zum Beispiel auch den linken und rechten Fahrtrichtungsanzeiger des Fahrzeuges 2 beinhalten.
4. Ein akustisches Signal oder Warnsignal 36, wie zum Beispiel eine Sirene.

In der bevorzugten Einbauvariante der vorliegenden Erfindung ist das BEM 8 mit den Türverriegelungs-Vorrichtungen 30, den Türkontakten 32 und den visuellen und akustischen Anzeigen 34 und 36 wie in den Figuren gezeigt verbunden und zwar entweder über den Datenbus eines LAN im Fahrzeug 2 oder über zumindest einen der Kabelbäume des Fahrzeuges 2. Das Steuerprogramm des BEM 8 wird zur Rekonfiguration des BEM 8 so verändert, dass letzteres in der Lage ist, wie unten beschrieben zu arbeiten: Zusätzlich zu der normalen Abfrage des Transponders 6 sendet das BEM 8 außerdem ein Abfragesignal als Transponder-Prüfsignal, wenn es feststellt, dass die sich im Besitz des Zündschlüssels 16 befindliche Person das Fahrzeug 2 deaktiviert oder abgestellt hat und im Begriff ist, auszusteigen. Das BEM 8 ist ebenfalls in der Lage zu bestimmen, ob diese Feststellung aufgrund der Signale, die es von Schaltern, Kontakten und Sensoren im Fahrzeug 2 erhalten kann, wie die Türverriegelung 30, die Türkontakte 32 und das Zündschloss 14, erfolgt ist. Wenn das BEM 8 das Zugangskennungs-Signal als Antwort auf das Transponder-Prüfsignal erhält, dann befindet sich der Transponder 6 noch in Reichweite der Antenne 10, obwohl die Person im Begriff ist, auszusteigen. Dies geschieht, wenn die Person unabsichtlich den Zündschlüssel 16 im Zündschloss 14 gelassen hat, oder im wichtigeren Fall, wenn der Transponder 6 vom Zündschlüssel 16 entfernt und in der Nähe der Antenne 10 an der Lenksäule 12 angebracht wurde. Wenn das BEM 8 die Zugangskennung als Antwort zum Transponder-Prüfsignal erhält, erzeugt es ein Warnsignal, welches an zumindest eine der visuellen und akustischen Warnanzeigen 34 und 36 gesendet wird, um damit die Person zu alarmieren. Die Person kann dann überprüfen, ob der Zündschlüssel 16 im Zündschloss 14 gelassen wurde, oder ob in der Tat ein potentieller Dieb den Transponder 6 entfernt und an der Lenksäule 12 angebracht hat.

Das BEM 8 kann das Transponder-Prüfsignal beim Erkennen einer der folgenden Bedingungen erzeugen:
1. Der Zündschloss-Schalter 14 befindet sich in der 'Aus'-Position 18 und die Türen des Fahrzeuges werden gerade verschlossen, wie das BEM 8 durch das Tür-Verriegelungssignal, das es zum Beispiel von den Türverriegelungs-Vorrichtungen 30 empfängt, feststellt. Der Empfang der Zugangskennung als Antwort veranlasst das BEM 8, ein Alarmsignal durch die Signalanzeigen 34 und/oder 36 zu erzeugen. In diesem Fall darf das Transponder-System jedoch nicht eine Situation aufzeigen, bei der der Zündschlüssel 16 unbeabsichtigterweise im Zündschloss 14 vor dem Verschließen des Fahrzeuges 2 gelassen wurde. Stattdessen würde man sich dafür auf einen Schlüsselkontakt im Schloss verlassen, der meldet ob der Schlüssel steckt, so wie er bereits in einigen Fahrzeugen eingebaut ist.
2. Der Zündschloss-Schalter 14 ist in der 'Aus'-Position 18 und zumindest einer der Türkontakte wurde betätigt, was anzeigt, dass eine der Türen geöffnet wurde. In diesem Fall erübrigt das Transponder-System 4 die Notwendigkeit eines Schlüsselkontaktes zum Anzeigen, dass der Schlüssel im Schloss gelassen wurde. Das BEM 8 würde die Erzeugung eines Warnsignals unter Benutzung der Anzeigen 34 und/oder 36 veranlassen. Da die Bedeutung des Warnsignals auch einfach nur als ein im Zündschloss 14 gelassener Schlüssel interpretiert werden kann, obwohl vielleicht der Transponder 6 entfernt und an der Lenksäule 12 angebracht wurde, kann das BEM 8 zusätzlich, wie im letzten Abschnitt beschrieben, reagieren. Wenn die Bedingungen des vorherigen Abschnitts im Anschluss erfüllt sind und die Zugangskennung empfangen wird, dann würde das BEM 8 ein gesteigertes Warnsignal über die Signalanzeigen 34 und/oder 36 ausgeben, welches anzeigt, dass der Alarmzustand seit Erzeugung des ersten Alarms eskaliert ist.
3. Der Zündschloss-Schalter 14 ist in der 'Aus'-Position 18 und ein Entriegel-Signal wurde gesendet, um die Türen des Fahrzeuges 2 zu entriegeln. Das BEM 8 prüft daher die Präsenz des Transponders 6, bevor die Person das Fahrzeug besteigt und den Schlüssel 16 in das Zündschloss 14 steckt. Wenn festgestellt wird, dass der Transponder 6 vorhanden ist, dann ist er von einem potentiellen Dieb aus dem Schlüssel entfernt worden und ein entsprechendes Warnsignal wird über die Signalanzeigen 34 und/oder 36 ausgegeben. Das Entriegel-Signal kann vom BEM 8 ferngesteuert oder über die Türverriegelungs-Vorrichtung 30 empfangen werden.
4. Der Zündschloss-Schalter 14 war vorher in der 'Ein'-Position 20, wurde dann in die 'Aus'-Position 18 für einen festgelegten Zeitraum gebracht, und der Schlüsselkontakt im Schloss meldet ein Entfernen des Schlüssels 16.

Das oben beschriebene Transponder-System 4 ist deswegen besonders vorteilhaft, weil es die Berechtigung des Benutzers prüft und außerdem Auskunft darüber gibt, ob der Transponder 6 durch einen potentiellen Dieb vom Schlüssel entfernt und in Reichweite der Antenne 10 verbracht wurde. Das System 4 kann ebenfalls dazu benutzt werden, um den Schlüsselkontakt im Zündschloss 14, der anzeigt, ob der Schlüssel stecken gelassen wurde, einzusparen, wodurch sich die Herstellungskosten reduzieren lassen.

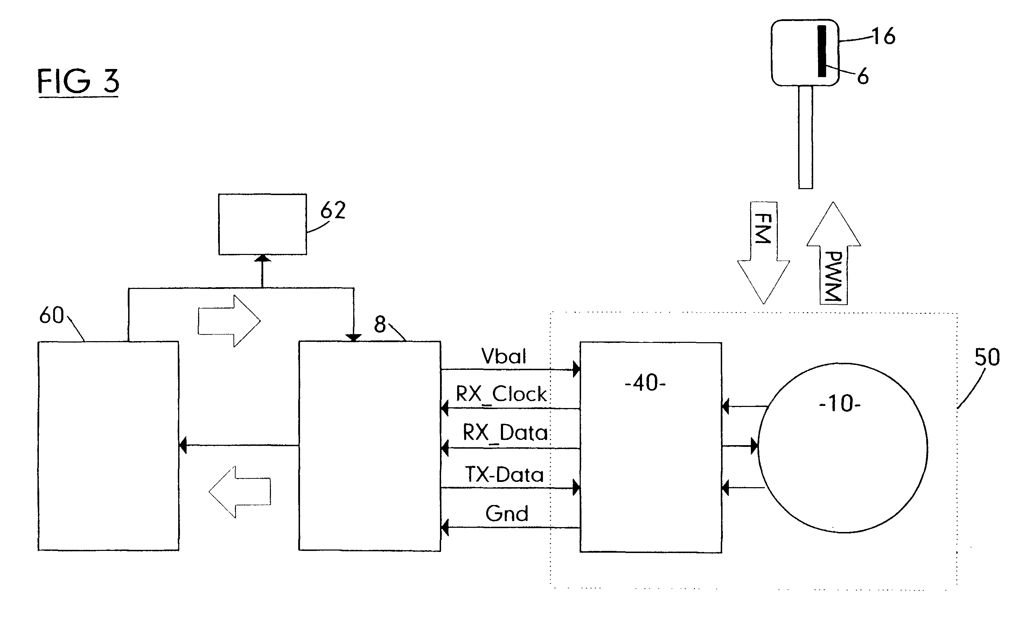

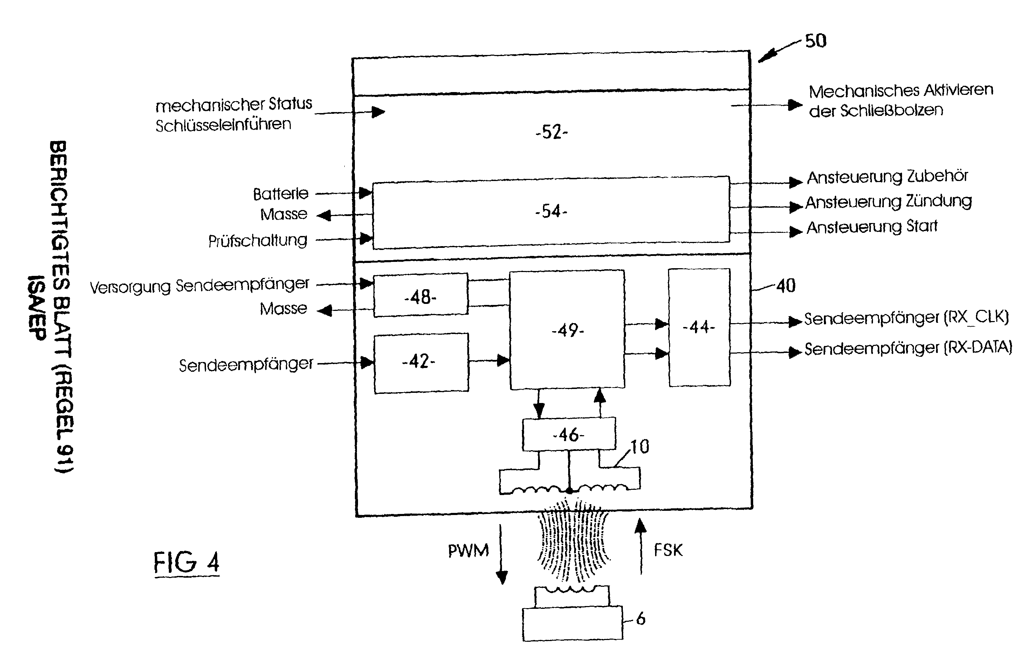

Das Transponder-System 4 kann mittels eines Funk-Sendeempfängers 40 realisiert werden, welcher eine Schnittstellenfunktion bereitstellt zwischen dem BEM 8 und einem Tiris™ 23mm Glass-Digital-Signature-Transponders (DST) 6, der in einem Tibbe™ Zündschlüssel 16 eingebaut ist, wie in Figur 3 dargestellt. Der DST 6 ist ein kryptographisches Gerät, das ein verschlüsseltes Zugangssignal als Antwort erzeugt, auf eine Aufforderung eines Abfragesignals hin. Die Antenne 10 ist in der Mitte angezapft und ein Teil des Sendeempfängers 40. Der Sendeempfänger 40 ist Teil einer Zündschloss-Einheit (TILA) 50, siehe Figur 4, welche außerdem das Lenkradschloss 52 und den Zündstarter-Schalter 54 enthält. Der Sendeempfänger 40 enthält eine Eingangschnittstelle 42, um Daten, die vom BEM 8 gesendet werden, zu empfangen; eine Ausgangsschnittstelle 44, um empfangene Takt- und Datensignale zum BEM 8 weiterzuleiten; eine Antennenschnittstelle 46 für die angezapfte Antenne 10 und außerdem einen Spannungsregler 48, um eine geregelte Stromversorgung für eine Haupt-Datenverarbeitungeinheit 49 des Sendeempfänger 40 zu liefern. Die TILA 50 ist so konfiguriert, dass die Antenne 10 an ein Lenkradschloss geklemmt werden kann, ohne dass die existierende Lenksäulenverkleidung geändert werden muss.

Der Sendeempfänger 40 erzeugt ein magnetisches Feld einer Frequenz von 134 kHz, welches durch die Antennenspule 10 ausgesendet wird. Die Energie des Feldes aktiviert das DST 6 und sendet dem DST 6 einen Puls-Breiten-modulierten (PWM) Datenstrom in Form eines modulierten Radiofrequenz-Signals. Der Energietransfer an und von dem DST 6 ist im Halbduplex-Verfahren, bei dem die Übertragungen nacheinander erfolgen. Das DST 6 speichert die empfangene Energie in einem Kondensator und diese Energie wird dann benutzt, um einen Datenstrom in Frequenzmodulation mit Frequenzumtastung (FSK) zurück zum Sendeempfänger 40 zu senden. Die zum DST 6 übertragenen Daten sind eine zufällige 40 Bit Aufforderung und das DST 6 meldet eine 24 Bit Unterschrift zurück. Der Sendeempfänger 40 demoduliert das Rücksignal und leitet die demodulierten Antwortdaten an das BEM 8 zur Weiterverarbeitung weiter. Das BEM 8 führt ein Berechtigungsbestimmungs-Verfahren in Übereinstimmung mit einem Aufforderungs/Antwort Protokoll durch. Die richtige Antwort kann nur erhalten werden, wenn der kryptographische Schlüssel sowohl dem BEM 8 wie auch dem DST 6 bekannt ist. Der Verschlüsselungs-Algorythmus, welcher im BEM 8 und im DST 6 gleich ist, stellt sicher, dass der kryptographische Schlüssel während Aufforderung und Antwort versteckt ist. Wenn der Versuch gemacht wird, das Fahrzeug abzuschließen, erzeugt das BEM 8 ein Warnsignal wenn es eine offene Tür oder eine unverschlossene Tür entdeckt oder wenn der Transponder 16 sich in der Nähe des TILA 50 befindet. Die letzte Bedingung bedeutet, dass entweder der Zündschlüssel 16 im Schloss 14 gelassen wurde oder dass der Sendeempfänger 6 in der Nähe des TILA 50 zum Zweck des Fahrzeugdiebstahls, während dieses unbeaufsichtigt ist, gelassen wurde. Dieser Zustand wird zur Unterscheidung von anderen Zuständen zum Beispiel dadurch angezeigt, dass ein spezielles akustisches Signal durch die Sirene erzeugt wird und/oder eine LED 34 im Fahrzeuginneren angelassen wird.

Das BEM 8 kann mit dem Motormanagement System 60 des Fahrzeuges und der im Fahrzeug eingebauten Meldungs-Anzeige 62, welche ein Teil der Instrumenteneinheit oder getrennt davon sein kann, kommunizieren. Die Meldungs-Anzeige 62 dient zur Anzeige von Meldungen an den Fahrer oder an einen Passagier. Das Motormanagement-System 60 kann für die Aktivierung der Wegfahrsperre oder die Erteilung der Fahrer-Berechtigung verantwortlich sein. Um zu bestimmen, ob die Wegfahrsperre aktiviert werden oder der Fahrer Fahrberechtigung erhalten soll, könnte das Motormanagement-System darauf achten, ob ein Versuch gemacht wird, das Fahrzeug zu starten, und wenn, dann wird eine 32 Bit Aufforderung an das BEM 8 geschickt. Das BEM 8 wird, nachdem es die Zugangskennung ausgewertet hat, einfach als Antwort auf die Aufforderung eine Mitteilung über die Gültigkeit der Zugangskennung an das Motormanagement-System 60 schicken. Diese Information wird an das Motormanagement-System 60 als 32 Bit Antwort weitergeleitet.

## Patentansprüche

1. Ein Transponder-System (4) für ein Fahrzeug (2), bei dem ein Transponder (6) ein Zugangssignal als Antwort auf ein Abfragesignal sendet und eine Signalverarbeitungseinrichtung (8, 40) zum Senden des Abfragesignals und zum Empfang des Zugangssignals, das der Transponder (6) in Antwort auf das Abfragesignal sendet, wobei ein Warnsignal erzeugt wird, wenn das Zugangssignal als Antwort auf ein Transponder-Prüfsignal empfangen wird, **dadurch gekennzeichnet, daß** die Signalverarbeitungseinrichtung (8, 40) das Abfragesignal als ein Transponder-Prüfsignal sendet als Antwort darauf, daß entweder das Fahrzeug (2) abgeschlossen wurde oder ein Entriegel-Signal bei einem in der "Aus"-Position (18) befindlichen Zündschloss-Schalter (14) gesendet wurde, um die Türen des Fahrzeugs (2) zu entriegeln.

2. Ein Transponder-System nach Anspruch 1 , bei dem die Signalverarbeitungseinrichtung (8,40) das Transponder-Prüfsignal sendet, wenn sich der Zündschloss-Schalter (14) des Fahrzeuges (2) in der "Aus"-Position (18) befindet und zumindest eine Türverriegelungs-Vorrichtung (30) des Fahrzeuges (2) in den geschlossenen Zustand gebracht wird.

3. Ein Transponder-System nach Anspruch 1, bei dem die Signalverarbeitungseinrichtung (8,40) das Abfragesignal als ein erstes Transponder-Prüfsignal sendet als Antwort darauf, dass sich der Zündschloss-Schalter (14) des Fahrzeugs (2) in der "Aus"-Position (18) befindet und zumindest eine Tür des Fahrzeugs (2) geöffnet wird, und welches dann ein erstes Warnsignal erzeugen lässt, wenn das Zugangssignal als Antwort auf das Transponder-Prüfsignal erhalten wurde.

4. Ein Transponder-System nach Anspruch 1, bei dem die Signalverarbeitungseinrichtung (8,40) das erste Transponder-Prüfsignal sendet, wenn sich der Zündschloss-Schalter (14) des Fahrzeugs (2) in der "Aus"-Position (18) befindet und/oder der Türkontakt (32) des Fahrzeugs (2) in den geöffneten Zustand gebracht wird, und welches ein erstes Warnsignal erzeugen lässt, wenn das Zugangssignal als Antwort auf das Transponder-Prüfsignal empfangen wird.

5. Ein Transponder-System, nach Anspruch 3 oder 4, bei dem das Warnsignal zu einem Alarmsignal im Zusammenhang mit dem ersten Warnsignal gehört.

6. Ein Transponder-System nach Anspruch 1, bei dem die Signalverarbeitungseinrichtung (8,40) das besagte Transponder-Prüfsignal als Antwort darauf, dass sich der Zündschloss-Schalter (14) des Fahrzeugs (2) in der "Aus"-Position (18) befindet und wenigstens eine der Fahrzeugtüren geöffnet wird, sendet.

7. Ein Transponder-System, nach Anspruch 1 oder 6, bei dem die Signalverarbeitungseinrichtung (8, 40) das Transponder-Prüfsignal sendet, wenn sich der Zündschloss-Schalter (14) des Fahrzeugs (2) in der "Aus"-Position (18) befindet und ein Türkontakt (32) des Fahrzeugs (2) in den geöffneten Zustand gebracht wird.

8. Ein Transponder-System nach Anspruch 1, bei dem die Signalverarbeitungseinrichtung (8,40) das Transponder-Prüfsignal als Antwort darauf sendet, dass sich der Zündschloss-Schalter (14) des Fahrzeugs (2) in der "Aus"-Position (18) befindet und ein Abziehen des Zündschlüssels (16) erkannt wird.

9. Ein Transponder-System nach einem der vorherigen Ansprüche, bei dem die Signalverarbeitungseinrichtung (8,40) das Transponder-Prüfsignal als Antwort darauf sendet, dass sich der Zündschloss-Schalter (14) des Fahrzeugs (2) in der "Aus"-Position (18) befindet und das Fahrzeug (2) aufgeschlossen wird.

10. Ein Transponder-System nach einem der vorherigen Ansprüche, bei dem die Signalverarbeitungseinrichtung (8,40) das Transpander-Prüfsignal eine vorbestimmte Zeit, nachdem der Zündschloss-Schalter (14) des Fahrzeugs (2) in die "Aus"-Position (18) gebracht wurde, sendet.

11. Ein Transponder-System nach Anspruch 10, bei dem die vorbestimmte Zeit nach dem Zeitpunkt angefangen wird zu messen, bei dem der Zündschloss-Schalter (14) des Fahrzeugs (2) in die "Aus"-Position (18) gebracht und das Abziehen des Zündschlüssels bemerkt wurde.

12. Ein Transponder-System nach einem der vorherigen Ansprüche, bei dem die Signalverarbeitungseinrichtung (8,40) ein Bord-Elektronikmodul (8) enthält, welches mit einer Antenne (10), welche in das Teil (12) des Fahrzeugs (2) integriert ist, verbunden ist.

13. Ein Transponder-System nach Anspruch 12, bei dem die Signalverarbeitungseinrichtung (8,40) einen Sendeempfänger (40) enthält, welcher die Antenne (10) enthält und welcher mit dem Bord-Elektronikmodul (8) verbunden ist.

14. Ein Transponder-System nach Anspruch 13, bei dem der Sendeempfänger (40) ein magnetisches Feld erzeugt, das dazu dient, den Transponder (6) mit Energie zu versorgen, das Abfragesignal zu senden und die Zugangskennung zu empfangen.

15. Ein Transponder-System nach Anspruch 14, bei dem das Abfragesignal und die Zugangskennung verschlüsselte Aufforderungs- bzw. Antwortdaten enthalten.

16. Ein Transponder-System nach Anspruch 1 bis 15, bei dem die Signalverarbeitungseinrichtung (8,40) mit zumindest einer Türverriegelungs-Vorrichtung (30) des Fahrzeugs (2) verbunden ist.

17. Ein Transponder-System nach Anspruch 1 bis 16, bei dem die Signalverarbeitungseinrichtung (8,40) mit zumindest einem Türkontakt (32) des Fahrzeugs (2) verbunden ist.

## Claims

1. Transponder system (4) for a vehicle (2) in which a transponder (6) transmits an access signal as response to an interrogation signal, and a signal processing device (8, 40) for transmitting the interrogation signal and receiving the access signal which the transponder (6) transmits in response to the interrogation signal, a warning signal being generated if the access signal is received in response to a transponder check signal, **characterized in that** the signal processing device (8, 40) transmits the interrogation signal as a transponder check signal as a response to the fact that either the vehicle (2) has been locked, or an unlocking signal has been transmitted when an ignition lock switch (14) is in the "off" position (18), in order to unlock the doors of the vehicle (2).

2. Transponder system according to Claim 1, in which the signal processing device (8, 40) transmits the transponder check signal if the ignition lock switch (14) of the vehicle (2) is in the "off" position (18) and at least a door locking device (30) of the vehicle (2) is placed in the closed state.

3. Transponder system according to Claim 1, in which the signal processing device (8, 40) transmits the interrogation signal as a first transponder check signal in response to the fact that the ignition lock switch (14) of the vehicle (2) is in the "off" position (18), and at least one door of the vehicle (3) is opened, and which causes a first warning signal to be generated if the access signal has been received in response to the transponder check signal.

4. Transponder system according to Claim 1, in which the signal processing device (8, 40) transmits the first transponder check signal if the ignition lock switch (14) of the vehicle (2) is in the "off" position (18), and/or the door contact (32) of the vehicle (2) is placed in the opened state, and which causes a first warning signal to be generated if the access signal is received in response to the transponder check signal.

5. Transponder system according to Claim 3 or 4, in which the warning signal is associated with an alarm signal in conjunction with the first warning signal.

6. Transponder system according to Claim 1, in which the signal processing device (8, 40) transmits the aforesaid transponder check signal in response to the fact that the ignition lock switch (14) of the vehicle (2) is in the "off" position (18) and at least one of the vehicle doors is opened.

7. Transponder system according to Claim 1 or 6, in which the signal processing device (8, 40) transmits the transponder check signal if the ignition lock switch (14) of the vehicle (2) is in the "off" position (18) and a door contact (32) of the vehicle (2) is moved into the opened state.

8. Transponder system according to Claim 1, in which the signal processing device (8, 40) transmits the transponder check signal in response to the fact that the ignition lock switch (14) of the vehicle (2) is in the "off" position (18) and it is detected that the ignition key (16) is withdrawn.

9. Transponder system according to one of the preceding claims, in which the signal processing device (8, 40) transmits the transponder check signal in response to the fact that the ignition lock switch (14) of the vehicle (2) is in the "off" position (18) and the vehicle (2) is unlocked.

10. Transponder system according to one of the preceding claims, in which the signal processing device (8, 40) transmits the transponder check signal for a predetermined time after the ignition lock switch (14) of the vehicle (2) has been placed in the "off" position (18).

11. Transponder system according to Claim 10, in which the measuring of the predetermined time is started after the point in time at which the ignition lock switch (14) of the vehicle (2) has been placed in the "off" position (18) and the ignition key has been withdrawn.

12. Transponder system according to one of the preceding claims, in which the signal processing device (8, 40) contains an on-board electronic module (8) which is connected to an antenna (10) which is integrated into the part (12) of the vehicle (2).

13. Transponder system according to Claim 12, in which the signal processing device (8, 40) contains a transceiver (40) which contains the antenna (10) and which is connected to the on-board electronic module (8).

14. Transponder system according to Claim 13, in which the transceiver (40) generates a magnetic field which has the purpose of supplying the transponder (6) with energy, transmitting the interrogation signal and receiving the access code.

15. Transponder system according to Claim 14, in which the interrogation signal and the access code contain encrypted request and response data.

16. Transponder system according to Claims 1 to 15, in which the signal processing device (8, 40) is connected to at least one door locking device (30) of the vehicle (2).

17. Transponder system according to Claims 1 to 16, in which the signal processing device (8, 40) is connected to at least one door contact (32) of the vehicle (2).

## Revendications

1. Système transpondeur (4) pour un véhicule (2), dans lequel un transpondeur (6) émet un signal d'accès en réponse à un signal d'interrogation, comportant un dispositif de traitement de signal (8, 40) pour émettre le signal d'interrogation et pour recevoir le signal d'accès que le transpondeur (6) émet en réponse au signal d'interrogation, un signal avertisseur étant créé lorsque le signal d'accès est reçu en réponse à un signal de test du transpondeur,
**caractérisé en ce que**
le dispositif de traitement de signal (8, 40) émet le signal d'interrogation comme signal de test du transpondeur en réponse soit au fait que le véhicule (2) a été fermé à clé, soit qu'un signal de déverrouillage a été émis en cas d'un interrupteur de serrure de contact (14) se trouvant en position « arrêt » (18) afin de déverrouiller les portières du véhicule (2).

2. Système transpondeur selon la revendication 1,
**caractérisé en ce que**
le dispositif de traitement de signal (8, 40) émet le signal de test du transpondeur si l'interrupteur de serrure de contact (14) du véhicule (2) se trouve en position « arrêt » et si au moins un dispositif de verrouillage des portières (30) du véhicule (2) est fermé.

3. Système transpondeur selon la revendication 1,
**caractérisé en ce que**
le dispositif de traitement de signal (8, 40) émet le signal d'interrogation comme un premier signal de test du transpondeur en réponse au fait que l'interrupteur de serrure de contact (14) du véhicule (2) se trouve en position « arrêt » (18) et qu'au moins une portière du véhicule (2) est ouverte, lequel signal de test permet de créer ensuite un premier signal de test si le signal d'accès a été obtenu en réponse au signal de test du transpondeur.

4. Système transpondeur selon la revendication 1,
**caractérisé en ce que**
le dispositif de traitement de signal (8, 40) émet le premier signal de test du transpondeur, si l'interrupteur de serrure de contact (14) du véhicule (2) se trouve en position « arrêt » (18) et/ou si le contact de la portière (32) du véhicule (2) est ouvert, lequel signal de test permet de créer un premier signal avertisseur si le signal d'accès a été reçu en réponse au signal de test du transpondeur.

5. Système transpondeur selon la revendication 3 ou 4,
**caractérisé en ce que**
le signal avertisseur appartient à un signal d'alarme en rapport avec le premier signal avertisseur.

6. Système transpondeur selon la revendication 1,
**caractérisé en ce que**
le dispositif de traitement de signal (8, 40) émet ledit signal de test du transpondeur en réponse au fait que l'interrupteur de serrure de contact (14) du véhicule (2) se trouve en position « arrêt » (18) et qu'au moins l'une des portières du véhicule est ouverte.

7. Système transpondeur selon la revendication 1 ou 6,
**caractérisé en ce que**
le dispositif de traitement de signal (8, 40) émet le signal de test du transpondeur si l'interrupteur de serrure de contact (14) du véhicule (2) se trouve en position « arrêt » (18) et si un contact de portière (32) du véhicule (2) est ouvert.

8. Système transpondeur selon la revendication 1,
**caractérisé en ce que**
le dispositif de traitement de signal (8, 40) émet le signal de test du transpondeur en réponse au fait que l'interrupteur de serrure de contact (14) du véhicule (2) se trouve en position « arrêt » (18) et que le retrait de la clé de contact (16) a été identifié.

9. Système transpondeur selon l'une quelconque des revendications précédentes,
**caractérisé en ce que**
le dispositif de traitement de signal (8, 40) émet le signal de test du transpondeur en réponse au fait que l'interrupteur de serrure de contact (14) du véhicule (2) se trouve en position « arrêt » (18) et que le véhicule (2) a été ouvert.

10. Système transpondeur selon l'une quelconque des revendications précédentes,
**caractérisé en ce que**
le dispositif de traitement de signal (8, 40) émet le signal de test du transpondeur un certain temps prédéfini après que l'interrupteur de serrure de contact (14) du véhicule (2) a été mis en position « arrêt » (18).

11. Système transpondeur selon la revendication 10,
**caractérisé en ce qu'**
on commence à mesurer le temps prédéfini après que l'interrupteur de serrure de contact (14) du véhicule (2) a été mis en position « arrêt » (18) et que le retrait de la clé de contact a été remarqué.

12. Système transpondeur selon l'une quelconque des revendications précédentes,
**caractérisé en ce que**
le dispositif de traitement de signal (8, 40) contient un module électronique de bord (8) raccordé à une antenne (10) intégrée dans la partie (12) du véhicule (2).

13. Système transpondeur selon la revendication 12,
**caractérisé en ce que**
le dispositif de traitement de signal (8, 40) contient un émetteur-récepteur (40) contenant l'antenne (10) et raccordé au module électronique de bord (8).

14. Système transpondeur selon la revendication 13,
**caractérisé en ce que**
l'émetteur-récepteur (40) crée un champ magnétique servant en outre à alimenter le transpondeur (6) en énergie, à émettre le signal d'interrogation et à recevoir le code d'accès.

15. Système transpondeur selon la revendication 14,
**caractérisé en ce que**
le signal d'interrogation et le code d'accès contiennent des données codées de requête ou de réponse.

16. Système transpondeur selon la revendication 1 à 15,
**caractérisé en ce que**
le dispositif de traitement de signal (8, 40) est raccordé à au moins un dispositif de verrouillage des portières (30) du véhicule (2).

17. Système transpondeur selon la revendication 1 à 16,
**caractérisé en ce que**
le dispositif de traitement de signal (8, 40) est raccordé à au moins un contact de portière (32) du véhicule (2).
